# EUROPÄISCHE PATENTSCHRIFT

(11) **EP 3 523 927 B1**
(45) Veröffentlichungstag und Bekanntmachung des Hinweises auf die Patenterteilung: **12.02.2020**
(21) Anmeldenummer: 17804840.1
(22) Anmeldetag: 17.11.2017
(51) Int. Cl.: H04L 12/28, H04W 4/12, H04L 12/58, H04L 29/08

(54) **KONZEPT ZUM STEUERN EINER NACHRICHTENÜBERMITTLUNG ZWISCHEN KOMMUNIKATIONSTEILNEHMERN EINES AUTOMATISIERUNGSSYSTEMS**
CONCEPT FOR CONTROLLING A MESSAGE TRANSMISSION BETWEEN COMMUNICATION SUBSCRIBERS IN AN AUTOMATION SYSTEM
CONCEPT DE COMMANDE D'UNE TRANSMISSION DE MESSAGES ENTRE DES ABONNÉS DE COMMUNICATION D'UN SYSTÈME D'AUTOMATISATION

(30) Priorität: 21.11.2016 DE 102016122384
(43) Veröffentlichungstag der Anmeldung: 14.08.2019
(73) Patentinhaber: Beckhoff Automation GmbH, 33415 Verl (DE)
(72) Erfinder: DRESSELHAUS, Pascal, 33415 Verl (DE); JANSSEN, Dirk, 33415 Verl (DE); GOLDSTEIN, Sven, 32257 Bünde (DE); BRACKE, Timo, 33415 Verl (DE); AUSTER, Manuel, 33161 Hövelhof (DE); GELDNER, Simon, 33330 Gütersloh (DE)
(74) Vertreter: Patentanwaltskanzlei WILHELM & BECK
(86) Internationale Anmeldenummer: PCT/EP2017/079601
(87) Internationale Veröffentlichungsnummer: WO 2018/091658

(56) Entgegenhaltungen:
- DE-A1-102015 107 478
- Christian Götz: "MQTT: Protokoll für das Internet der Dinge | heise Developer", Heise Developer, 15. April 2014 (2014-04-15), Seiten 1-5, XP055440964, Gefunden im Internet: URL:https://www.heise.de/developer/artikel /MQTT-Protokoll-fuer-das-Internet-der-Ding e-2168152.html?seite=all [gefunden am 2018-01-15]
- Anonymous: "MQTT Version 3.1.1 Plus Errata 01", , 10. Dezember 2015 (2015-12-10), Seiten 1-81, XP055439486, Gefunden im Internet: URL:http://docs.oasis-open.org/mqtt/mqtt/v 3.1.1/mqtt-v3.1.1.pdf [gefunden am 2018-01-10]

## Beschreibung

Die Erfindung betrifft ein Verfahren zum Steuern einer Nachrichtenübermittlung zwischen Kommunikationsteilnehmern eines Automatisierungssystems. Die Erfindung betrifft ferner einen Nachrichtenvermittler für ein Automatisierungssystem. Die Erfindung betrifft des Weiteren ein Automatisierungssystem sowie ein Computerprogramm.

Automatisierungssysteme umfassen in der Regel mehrere Kommunikationsteilnehmer. Hierbei kann beispielsweise vorgesehen sein, dass ein Kommunikationsteilnehmer einen oder mehrere Dienste für die anderen Kommunikationsteilnehmer anbietet.

Es besteht ein Bedarf, dass den anderen Kommunikationsteilnehmern effizient mitgeteilt werden kann, dass der eine Kommunikationsteilnehmer einen oder mehrere Dienste anbietet.

Die Offenlegungsschrift DE 11 2010 005 499 T5 zeigt ein Verfahren zum Steuern der Nachrichtenübermittlung zwischen einer oder mehreren Publisher-Anwendungen und einer oder mehreren Subscriber-Anwendungen.

Die Patentschrift EP 2 566 281 B1 zeigt eine Architektur eines Internets der Dinge (IoT).

Aus Christian Götz, "MQTT: Protokoll für das Internet der Dinge | heise Developer", Heise Developer, (20140415), Seiten 1 - 5, URL: https://www.heise.de/developer/artikel/MQTT-Protokoll-fuer-das-Internet-der-Dinge-2168152.html?seite=all, (20180115) ist ein Verfahren mit den Merkmalen des Oberbegriffs des Anspruchs 1 bekannt.

Ein Nachrichtaustausch von Messdaten in einen Sensornetzwerk auf der Grundlage des Publisher-Subscriber-Modells ist in der DE 10 2015 107 478 A1 beschrieben.

"MQTT Version 3.1.1 Plus Errata 01", (20151210), Seiten 1-81, URL: http://docs.oasis-open.org/mqtt/mqtt/v3.1.1/mqtt-v3.1.1.pdf, (20180110) beschreibt ein MQTT-Protokoll, das zur Kommunikation in einer IoT-Architektur eingesetzt wird.

Die der Erfindung zugrundeliegende Aufgabe ist darin zu sehen, ein Konzept zum effizienten Steuern einer Nachrichtenübermittlung zwischen Kommunikationsteilnehmern eines Automatisierungssystems bereitzustellen.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Die Erfindung basiert auf der Erkenntnis, dass die obige Aufgabe dadurch gelöst werden kann, dass ein Kommunikationsteilnehmer, welcher einen oder mehrere Dienste anbietet, diese Dienste für ein bestimmtes Thema veröffentlicht ("published"). Subscriber-Anwendungen, von weiteren Kommunikationsteilnehmern, die für das entsprechende Thema eingetragen sind, erhalten somit durch den Nachrichtenvermittler mitgeteilt, dass entsprechende Dienste angeboten werden. Hierbei ist festzuhalten, dass der Nachrichtenvermittler den eingetragenen Subscriber-Anwendungen lediglich eine Nachricht übermittelt, dass der eine oder die mehreren Dienste angeboten werden. Die vom Nachrichtenvermittler übermittelte Nachricht umfasst insbesondere nicht die Information, von welchen der Kommunikationsteilnehmer der oder die Dienste angeboten werden. Der erste Kommunikationsteilnehmer bleibt also anonym.

Ein weiterer Vorteil ist insbesondere, dass sich die Kommunikationsteilnehmer des Automatisierungssystems untereinander nicht kennen müssen. Beispielsweise veröffentlicht der erste Kommunikationsteilnehmer eine Nachricht zu einem bestimmten Thema. Ein zweiter Kommunikationsteilnehmer hat das Thema abonniert. Über den Nachrichtenvermittler bekommt der zweite Kommunikationsteilnehmer anschließend die Nachricht, ohne zu wissen, dass diese Nachricht ursprünglich vom ersten Kommunikationsteilnehmer stammt.

Es liegt somit eine Anonymität vor.

Im erfindungsgemäßen Automatisierungssystem ist es also nicht vorgesehen, also insbesondere nicht möglich, eine Nachricht direkt von einem Kommunikationsteilnehmer an einen anderen Kommunikationsteilnehmer zu senden. Alle für ein bestimmtes Thema eingetragene Subscriber-Anwendungen der Kommunikationsteilnehmerkönnen prinzipiell auf alle Nachrichten für das bestimmte Thema zugreifen. Das bedeutet auch, dass sich die Kommunikationsteilnehmer untereinander nicht kennen. Der Nachrichtenvermittler entkoppelt den Nachrichtentransfer und somit den Datentransfer zwischen den Kommunikationsteilnehmer.

Alle Nachrichten und somit alle Daten laufen ausschließlich über den Nachrichtenvermittler.

Dadurch wird also insbesondere der technische Vorteil bewirkt, dass Kommunikationsteilnehmern eines Automatisierungssystems effizient mitgeteilt werden kann, dass eine oder mehrere Dienste angeboten werden.

Ein Nachrichtenvermittler im Sinne der Beschreibung kann insbesondere auch als ein "Message Broker" bezeichnet werden.

Die Erfindung basiert also insbesondere auf der Verwendung eines an sich bekannten Nachrichtenübermittlungsmechanismus, dem Publish-Subscribe-Nachrichtenübermittlungsmechanismus. "Publish" steht für "Veröffentlichen". "Subscribe" steht für "Abonnieren". Mittels des Publish/Subscribe-Nachrichtenübermittlungsmechanismus können Subscriber-Anwendungen Informationen in Form von Nachrichten von Publisher-Anwendungen empfangen. Diesbezüglich ist eine Nachricht im Sinne der Beschreibung beispielsweise eine Einheit von Daten zum Austausch zwischen Anwendungsprogrammen.

Eine Publisher-Anwendung kann insbesondere auch als ein "Ver-öffentlicher" bezeichnet werden.

Eine Subscriber-Anwendung kann insbesondere als ein "Abonnent" bezeichnet werden.

Die erfindungsgemäße Idee liegt nun insbesondere darin, dass über den Nachrichtenvermittler den Kommunikationsteilnehmern mitgeteilt wird, wenn einer der Kommunikationsteilnehmer einen oder mehrere Dienste anbietet, wobei nur mitgeteilt wird, dass ein oder mehrere Dienste angeboten werden, nicht aber noch die zusätzliche Information, dass der eine oder die mehreren Dienste von dem einen der Kommunikationsteilnehmer angeboten wird. Hier ist es in vorteilhafter Weise so, dass, sobald eine der Subscriber-Anwendungen eines Kommunikationsteilnehmers für das angegebene Thema eingetragen ist, er durch den Nachrichtenvermittler automatisch die Nachricht erhält, dass der eine oder die mehreren Dienste angeboten werden. Diese Information muss der Kommunikationsteilnehmer somit nicht mehr eigenständig abrufen.

Der entsprechende Kommunikationsteilnehmer weiß also, dass ein oder mehrere Dienste angeboten werden, die der Kommunikationsteilnehmer insofern insbesondere in Anspruch nehmen kann.

Nach einer Ausführungsform des Verfahrens ist vorgesehen, dass die Nachricht von der Publisher-Anwendung des ersten Kommunikationsteilnehmers die Information umfasst, in welchem Thema des Themenbaums, Aufträge für den einen oder die mehreren Dienste veröffentlicht werden sollen, wobei das Verfahren ferner die folgenden Schritte umfasst:
Eintragen mittels des Nachrichtenvermittlers eines mittels einer Subscriber-Anwendung des ersten Kommunikationsteilnehmers erzeugten Abonnements für dasjenige Thema, in welchem Thema des Themenbaums Aufträge für den einen oder die mehreren Dienste veröffentlicht werden sollen,
als Reaktion darauf, dass eine Nachricht über dasjenige Thema des Themenbaums, in welchem Aufträge für den einen oder die mehreren Dienste veröffentlicht werden sollen, von einer Publisher-Anwendung des zweiten Kommunikationsteilnehmers veröffentlicht wurde, dass dem einen oder den mehreren Diensten entsprechender Auftrag ausgeführt werden soll, Übermitteln mittels des Nachrichtenvermittlers der veröffentlichten Nachricht, dass dem einen oder den mehreren Diensten entsprechender Auftrag ausgeführt werden soll, an die eingetragene Subscriber-Anwendung des ersten Kommunikationsteilnehmers.

Dadurch wird insbesondere der technische Vorteil bewirkt, dass der Auftrag des zweiten Kommunikationsteilnehmers effizient an den ersten Kommunikationsteilnehmer übermittelt werden kann. Es reicht hier also aus, dass die Publisher-Anwendung des zweiten Kommunikationsteilnehmers eine Nachricht über dasjenige Thema veröffentlicht, in welchem dem oder den Diensten entsprechende Aufträge veröffentlicht werde sollen, dass der erste Kommunikationsteilnehmer den entsprechenden Auftrag automatisch erhält - dies deshalb, da die Subscriber-Anwendung des ersten Kommunikationsteilnehmers für das entsprechende Thema in den Themenbaum eingetragen wurde.

Dasjenige Thema, in welchem Aufträge für den einen oder die mehreren Dienste veröffentlicht werden sollen, ist beispielsweise das gleiche Thema, wie das angegebene Thema, über das der erste Kommunikationsteilnehmer die Nachricht veröffentlicht hat, dass er einen oder mehrere Dienste anbietet, oder es ist beispielsweise ein anderes Thema.

Gemäß einer weiteren Ausführungsform des Verfahrens ist vorgesehen, dass der Auftrag angibt, dass Nachrichten aus einem bestimmten Thema des Themenbaums mittels des oder der Dienste verarbeitet werden sollen, wobei das Verfahren ferner die folgenden Schritte umfasst:
- als Reaktion darauf, dass mittels einer Subscriber-Anwendung des ersten Kommunikationsteilnehmers ein Abonnement für das bestimmte Thema erzeugt wurde,
- Eintragen der Subscriber-Anwendung des ersten Kommunikationsteilnehmers für das bestimmte Thema mittels des Nachrichtenvermittlers,
- Übermitteln der Nachrichten über das bestimmte Thema an die Subscriber-Anwendung des ersten Kommunikationsteilnehmers mittels des Nachrichtenvermittlers.

Dadurch wird zum Beispiel der technische Vorteil bewirkt, dass die Daten aus dem bestimmten Thema effizient mittels des Dienstes des ersten Kommunikationsteilnehmers in Reaktion auf den Auftrag verarbeitet werden können.

Der zweite Kommunikationsteilnehmer kann also über die entsprechende Nachricht dem ersten Kommunikationsteilnehmer unter Vermittlung des Nachrichtenvermittlers effizient vorgeben, dass er die Daten aus einem bestimmten Thema des Themenbaums verarbeiten soll.

Gemäß einer weiteren Ausführungsform des Verfahrens ist vorgesehen, dass der Auftrag angibt, dass mittels des oder der Dienste verarbeitete Daten für ein vorgegebenes Thema des Themenbaums veröffentlicht werden sollen, wobei das Verfahren den folgenden Schritt umfasst:
- als Reaktion darauf, dass eine die verarbeiteten Daten umfassende Nachricht über das vorgegebene Thema von einer Publisher-Anwendung des ersten Kommunikationsteilnehmers veröffentlicht wurde, Übermitteln der die verarbeiteten Daten umfassende Nachricht an eine für das vorgegebene Thema eingetragene Subscriber-Anwendung des zweiten Kommunikationsteilnehmers mittels des Nachrichtenvermittlers.

Dadurch wird zum Beispiel der technische Vorteil bewirkt, dass die verarbeiteten Daten effizient zum zweiten Kommunikationsteilnehmer übermittelt werden können. Das heißt also insbesondere, dass der zweite Kommunikationsteilnehmer hier den ersten Kommunikationsteilnehmer unter Verwendung des Nachrichtenvermittlers anweist, wohin er die verarbeiteten Daten schicken, also veröffentlichen, soll. Eine Subscriber-Anwendung des zweiten Kommunikationsteilnehmers ist für das vorgegebene Thema eingetragen, so dass die verarbeiteten Daten automatisch zur Subscriber-Anwendung des zweiten Kommunikationsteilnehmers mittels des Nachrichtenvermittlers übermittelt werden.

Gemäß einer Ausführungsform des Verfahrens ist vorgesehen, dass die Nachricht, dass der erste Kommunikationsteilnehmer einen oder mehrere Dienste anbietet, eine Kommandobeschreibung umfasst, die angibt, welche Kommandos der oder die Dienste erwarten, und/oder eine Parameterbeschreibung umfasst, die angibt, welche Parameter der oder die Dienste erwarten, wobei das Verfahren den folgenden Schritt umfasst:
- Übermitteln der Kommandobeschreibung und/oder der Parameterbeschreibung an die eingetragene Subscriber-Anwendung des zweiten Kommunikationsteilnehmers mittels des Nachrichtenvermittlers.

Dadurch wird zum Beispiel der technische Vorteil bewirkt, dass den weiteren Kommunikationsteilnehmern unter Vermittlung des Nachrichtenvermittlers effizient mitgeteilt werden kann, welche Kommandos respektive welche Parameter der oder die Dienste erwarten.

Eine Kommandobeschreibung respektive eine Parameterbeschreibung gibt insbesondere eine Kommandosyntax respektive eine Parametersyntax vor.

Dadurch, dass die eingetragene Subscriber-Anwendung des zweiten Kommunikationsteilnehmers aufgrund der Eintragung die Kommandobeschreibung respektive die Parameterbeschreibung automatisch empfängt, können in vorteilhafter Weise und in effizienter Weise Kommandobeschreibungsaktualisierungen respektive Parameterbeschreibungsaktualisierungen dem zweiten Kommunikationsteilnehmer effizient mitgeteilt werden.

Sofern sich also beispielsweise eine Kommandosyntax respektive eine Parametersyntax ändern sollte, so kann diese Änderung dem zweiten Kommunikationsteilnehmer effizient mitgeteilt werden.

Nach einer Ausführungsform umfasst das Verfahren den folgenden Schritt: als Reaktion darauf, dass eine Nachricht von einer Publisher-Anwendung eines der Kommunikationsteilnehmer über ein Thema veröffentlicht wurde, wobei die Nachricht eine Datenbeschreibung umfasst, wie Daten des einen der Kommunikationsteilnehmer interpretiert werden müssen, Speichern der Datenbeschreibung mittels des Nachrichtenvermittlers.

Dadurch wird zum Beispiel der technische Vorteil bewirkt, dass den Kommunikationsteilnehmern effizient mitgeteilt werden kann, wie Daten, die einer der Kommunikationsteilnehmer zur Verfügung stellt, interpretiert werden müssen.

Die Datenbeschreibung kann also beispielsweise zu einem späteren Zeitpunkt als Reaktion auf einen Empfang einer späteren Anforderung für ein Abonnement in Bezug auf eine neue Subscriber-Anwendung für das Thema an die neue Subscriber-Anwendung übermittelt werden.

Dadurch, dass die Datenbeschreibung an entsprechend eingetragene Subscriber-Anwendungen übermittelt wird, wird ferner insbesondere der technische Vorteil bewirkt, dass eine Aktualisierung oder Änderung der Datenbeschreibung ebenfalls automatisch den eingetragenen Subscriber-Anwendungen mitgeteilt wird.

In einer Ausführungsform wird die Datenbeschreibung in einem Retain-Topic gespeichert.

Ein Retain-Topic bezeichnet einen Topic, in welchem Nachrichten gespeichert bleiben, auch wenn momentan keine Subscriber-Anwendung für das Topic eingetragen ist. Topic steht hier synonym für Thema.

Nach einer Ausführungsform des Verfahrens ist vorgesehen, dass das bestimmte Thema des Themenbaums dem der Nachricht entsprechenden Thema des einen der Kommunikationsteilnehmer entspricht, wobei das Verfahren den folgenden Schritt umfasst:
- Übermitteln der Datenbeschreibung an die Subscriber-Anwendung des ersten Kommunikationsteilnehmers mittels des Nachrichtenvermittlers.

Dadurch wird zum Beispiel der technische Vorteil bewirkt, dass der erste Kommunikationsteilnehmer effizient in Kenntnis darüber gesetzt werden kann, wie er die Daten, welche er gemäß dem Auftrag zu verarbeiten hat, interpretieren muss.

Dadurch wird insbesondere eine effiziente Bekanntgabe von Metainformationen (Datenbeschreibung) bewirkt.

Nach einer Ausführungsform des Verfahrens ist vorgesehen, dass die Nachrichten in einem Binär-Format vorliegen.

Dadurch wird zum Beispiel der technische Vorteil bewirkt, dass eine respektive ein effiziente und schnelle Datenübermittlung respektive Datenaustausch ermöglicht sind.

Gemäß einer Ausführungsform des Verfahrens ist vorgesehen, dass der oder die Dienste ausgewählt aus der folgenden Gruppe von Diensten sind: Archivierung, Datenanalyse, Zustandsüberwachung (auf Englisch: Condition-Monitoring).

Dadurch wird zum Beispiel der technische Vorteil bewirkt, dass das Automatisierungssystem eine Archivierung respektive eine Datenanalyse effizient ermöglicht.

Das Konzept des Condition Monitoring (auf deutsch: Zustands-überwachung) basiert auf einer regelmäßigen oder permanenten Erfassung eines Maschinenzustandes durch Messung und Analyse physikalischer Größen, zum Beispiel Schwingungen, Temperaturen, Lage/Näherung.

Nach einer Ausführungsform des Verfahrens ist vorgesehen, dass die mehreren Kommunikationsteilnehmer ausgewählt aus der folgenden Gruppe von Kommunikationsteilnehmern sind: Aktoreinrichtung, insbesondere Antriebseinrichtung, Sensoreinrichtung, Steuerungseinrichtung, Maschinensteuerungseinrichtung, Datenbankserver, Datensicherungs-Server.

Dadurch wird zum Beispiel der technische Vorteil bewirkt, dass das Automatisierungssystem vielfältig verwendet werden kann.

Eine Aktoreinrichtung umfasst insbesondere einen oder mehrere Motoren respektive Antriebe.

Technische Funktionalitäten des Nachrichtenvermittlers respektive des Automatisierungssystems ergeben sich analog aus entsprechenden technischen Funktionalitäten des Verfahrens und umgekehrt.

Die Formulierung "respektive" umfasst insbesondere die Formulierung "und/oder".

Nach einer Ausführungsform ist einer oder sind mehrere Kommunikationsteilnehmer als ein Internet-of-Things-Client ausgebildet. Die Formulierung "Internet of Things" kann durch "IoT" abgekürzt werden.

Nach einer Ausführungsform umfasst ein Auftrag im Sinne der Beschreibung eine Zeitangabe, für wie lange der oder die Dienste den Auftrag ausführen sollen.

Beispielsweise gibt der Auftrag an, dass Daten für einen bestimmten Zeitraum archiviert werden sollen. Nachdem der Zeitraum beendet ist, wird beispielsweise das Archivieren beendet.

Ein Verarbeiten von Daten im Sinne der Beschreibung umfasst insbesondere ein Analysieren von Daten respektive ein Archivieren von Daten. Ein Archivieren von Daten umfasst insbesondere ein Speichern von Daten.

Die Erfindung wird im Folgenden anhand von bevorzugten Ausführungsbeispielen näher erläutert. Hierbei zeigen
- Fig. 1: ein Ablaufdiagramm eines Verfahrens zum Steuern einer Nachrichtenübermittlung zwischen Kommuni-kationsteilnehmern eines Automatisierungssys-tems,
- Fig. 2: ein Automatisierungssystem,
- Fig. 3 bis 8: jeweils ein Blockdiagramm, welches verschiedene Schritte in einem Verfahren zum Steuern einer Nachrichtenübermittlung zwischen Kommunikations-teilnehmern eines Automatisierungssystems illustriert und
- Fig. 9 bis 13: jeweils ein Blockdiagramm, verschiedene Schritte in einem weiteren Verfahren zum Steuern einer Nachrichtenübermittlung zwischen Kommunikationsteilnehmern eines Automatisierungssystems illustriert.

Im Folgenden können für gleiche Merkmale gleiche Bezugszeichen verwendet werden.

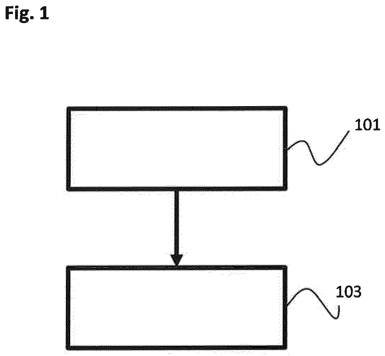

Fig. 1 zeigt ein Ablaufdiagramm eines Verfahrens zum Steuern einer Nachrichtenübermittlung zwischen Kommunikationsteilnehmern eines Automatisierungssystems wobei auf den Kommunikationsteilnehmern jeweils eine oder mehrere Publisher-Anwendungen und/oder eine oder mehrere Subscriber-Anwendungen ausgeführt werden, wobei das Automatisierungssystem einen Nachrichtenvermittler umfasst, der ausgebildet ist, Abonnements für angegebene Themen für benannte Subscriber-Anwendungen in einen Themenbaum einzutragen, umfassend die folgenden Schritte:
- als Reaktion darauf, dass eine Nachricht über ein angegebenes Thema des Themenbaums von einer Publisher-Anwendung eines ersten der mehreren Kommunikationsteilnehmer veröffentlicht wurde, dass der erste Kommunikationsteilnehmer einen oder mehrere Dienste anbietet,
- Ermitteln 101 mittels des Nachrichtenvermittlers, ob eine Subscriber-Anwendung eines zweiten der mehreren Kommunikationsteilnehmer für das angegebene Thema eingetragen ist oder nicht,
- wenn eine Subscriber-Anwendung für das angegebene Thema eingetragen ist, Übermitteln 103 einer Nachricht mittels des Nachrichtenvermittlers, dass der eine oder die mehreren Dienste angeboten werden, an die eingetragene Subscriber-Anwendung des zweiten Kommunikationsteilnehmers.

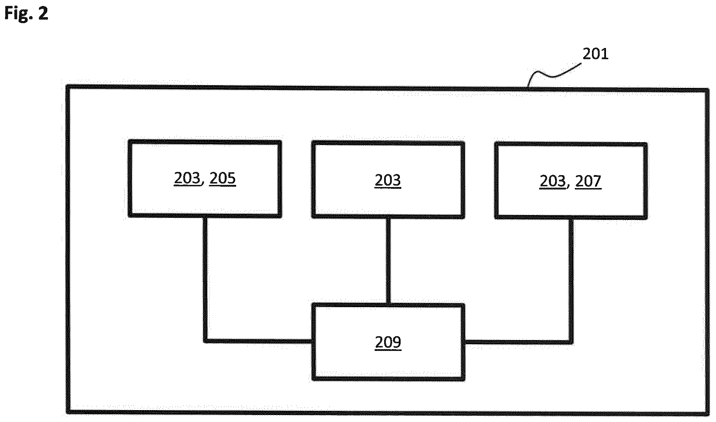

Fig. 2 zeigt ein Automatisierungssystem 201.

Das Automatisierungssystem 201 umfasst mehrere Kommunikationsteilnehmer 203 sowie einen Nachrichtenvermittler 209.

Einer der Kommunikationsteilnehmer 203 wird nachfolgend als erster Kommunikationsteilnehmer bezeichnet und ist zusätzlich mit dem Bezugszeichen 205 versehen.

Ein anderer der mehreren Kommunikationsteilnehmer 203 wird nachfolgend als zweiter Kommunikationsteilnehmer bezeichnet und ist zusätzlich mit dem Bezugszeichen 207 versehen.

Auf den mehreren Kommunikationsteilnehmern 203 werden jeweils eine oder mehrere Publisher-Anwendungen und/oder eine oder mehrere Subscriber-Anwendungen ausgeführt. Der Nachrichtenvermittler 209 ist ausgebildet, Abonnements für angegebene Themen für benannte Subscriber-Anwendungen in einen Themenbaum einzutragen.

Der Nachrichtenvermittler 209 ist beispielsweise ausgebildet, als Reaktion darauf, dass eine Nachricht über ein angegebenes Thema des Themenbaums von einer Publisher-Anwendung des ersten Kommunikationsteilnehmers 205 veröffentlicht wurde, dass der erste Kommunikationsteilnehmer 205 einen oder mehrere Dienste anbietet, zu ermitteln, ob eine Subscriber-Anwendung des zweiten Kommunikationsteilnehmers 207 für das angegebene Thema eingetragen ist oder nicht.

Der Nachrichtenvermittler 209 ist beispielsweise ausgebildet, wenn eine Subscriber-Anwendung für das angegebene Thema eingetragen ist, eine Nachricht an die eingetragene Subscriber-Anwendung des zweiten Kommunikationsteilnehmers 207 zu übermitteln, dass der eine oder die mehreren Dienste angeboten werden.

Die mehreren Kommunikationsteilnehmer 203 sind beispielsweise als IoT-Clients ausgebildet.

Beispielsweise ist der erste Kommunikationsteilnehmer 205 als eine Datenverarbeitungseinrichtung ausgebildet. Der entsprechende Dienst ist in diesem Fall beispielsweise eine Datenanalyse.

Beispielsweise ist der zweite Kommunikationsteilnehmer 207 als eine Sensoreinrichtung ausgebildet. Sensordaten der Sensoreinrichtung 207 werden in diesem Fall beispielsweise unter Verwendung oder unter Vermittlung des Nachrichtenvermittlers 209 an die Datenverarbeitungseinrichtung 205 übermittelt, so dass diese die Sensordaten beispielsweise analysieren, also auswerten, kann.

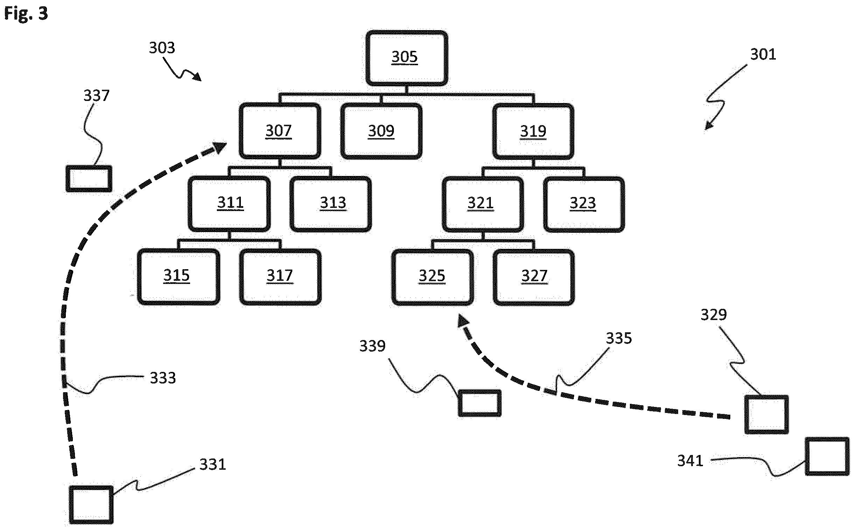

Fig. 3 bis 8 zeigen jeweils ein Blockdiagramm eines Automatisierungssystems 301, welches Schritte in einem Verfahren zum Steuern einer Nachrichtenübermittlung zwischen Kommunikationsteilnehmern eines Automatisierungssystems illustriert.

Das Automatisierungssystem 301 umfasst einen Themenbaum 303, der hierarchisch aufgebaut ist. Das heißt also, dass der Themenbaum 303 mehrere Themen 305 bis 327 umfasst, die beispielsweise gemäß einer Baumstruktur, die beispielsweise teilweise oder vollständig hierarchisch aufgebaut ist, angelegt sind.

Ein Thema im Sinne der Beschreibung kann auch durch den englischsprachigen Begriff "Topic" ersetzt oder mit diesem bezeichnet werden.

Die einzelnen Topics hängen insbesondere vom konkreten Automatisierungssystem ab. Im Folgenden werden Beispiele für mögliche Topics aufgezählt, die gemäß beispielhaften Ausführungsformen verwendet werden, wobei die Aufzählung nicht einschränkend, sondern lediglich exemplarisch zu verstehen ist:
"Name eines Maschinenbauers", "Name eines Kunden", "Bezeichnung einer Maschine", "Transportsystem", "Fehlermeldungen", "Statusmeldungen", "Name des Service", "Beschreibung des Service", "Datenbeschreibung", "Kommandobeschreibung", "Parameterbeschreibung".

Der Maschinenbauer ist beispielsweise ein Hersteller für Automatisierungskomponenten, wie zum Beispiel ein Hardware- oder Softwarehersteller sein. Der Maschinenbauer ist beispielsweise der Hersteller einzelner Maschinen, wobei die Maschinen beispielsweise aus einer Mehrzahl von Automatisierungskomponenten gebildet sind.

Die Kunden sind beispielsweise die Anwender der Produkte des Maschinenbauers.

Eine Maschine ist beispielsweise eine der folgenden Maschinen: Werkzeugmaschine, Schmiedepresse, Spritzgießmaschine, Abfüllmaschine, Industrieroboter.

Ein Transportsystem ist beispielsweise ein Bestandteil einer Maschine des Maschinenbauers.

Eine Aktoreinrichtung umfasst beispielsweise einen oder mehrere Aktoren. Ein Aktor ist beispielsweise einer der folgenden Aktoren: Relais, Ventil.

Eine Sensoreinrichtung umfasst beispielsweise ein oder mehrere der folgenden Elemente: Temperatursensor, Drucksensor, Lichtsensor, Drehgeber.

Ein Transportsystem umfasst beispielsweise eine oder mehrere Antriebseinrichtungen. Eine Antriebseinrichtung umfasst beispielsweise ein oder mehrere der folgenden Elemente: Schrittmotor, Linearmotor, Synchronmaschine, Asynchronmaschine, Frequenzumrichter, Servoverstärker.

Ein Transportsystem umfasst beispielsweise neben zumindest einer Antriebseinrichtung eine Aktoreinrichtung und/oder eine Sensoreinrichtung.

Nachrichten im Sinne der Beschreibung umfasst beispielsweise Daten. Daten umfassen beispielsweise Fehlermeldungen, beispielsweise eine Fehlermeldung einer Maschine. Dann können beispielsweise in vorteilhafter Weise effizient Nachrichten abonniert werden, welche Fehlerereignisse bei bestimmten Maschinen/Einrichtungen anzeigen. Generell können auch spezielle Ereignisse separat als Topic bestehen, wie beispielsweise das Erreichen einer Bestimmten Produktionszahl einer Abfüllmaschine. So ist es vorteilhafterweise möglich, relativ schnell einen möglichen Verschleiß der Maschinen festzustellen. Denn in der Regel korreliert eine hohe Produktionszahl mit einer hohen Belastung, was üblicherweise in einem höheren Verschleiß resultiert.

Das Topic 319 in dem beschriebenen Ausführungsbeispiel steht für "Services" also "Dienste". In diesem Teil des Themenbaums 303 werden die von den Kommunikationsteilnehmern bereitgestellten Dienste eingetragen.

Das Automatisierungssystem 301 umfasst einen ersten Kommunikationsteilnehmer 329 sowie einen zweiten Kommunikationsteilnehmer 331. Das Automatisierungssystem 301 umfasst beispielsweise noch weitere Kommunikationsteilnehmer, die der Übersicht halber nicht eingezeichnet sind.

Dadurch, dass der Topic 319 existiert, wissen die Kommunikationsteilnehmer, dass generell im Automatisierungssystem 301 Dienste angeboten werden können. Durch das Durchsuchen der relativ zum Topic 319 erzeugten Untertopics können die Kommunikationsteilnehmer an die Information gelangen, wie die Dienste genutzt werden können. Dies soll im Folgenden beispielhaft näher erläutert werden.

Der erste Kommunikationsteilnehmer 329 bietet einen Archivierungsdienst für Kommunikationsteilnehmer des Automatisierungssystems 301 an.

Der erste Kommunikationsteilnehmer 329 veröffentlicht eine Nachricht 339 über ein angegebenes Thema 325, wie der Archivierungsdienst genutzt werden kann. Das Thema 325 kann somit als "Beschreibung des Dienstes" respektive "Kommandobeschreibung und/oder Parameterbeschreibung" bezeichnet werden. Dieses Veröffentlichen wird symbolisch mittels eines Pfeils mit dem Bezugszeichen 335 dargestellt.

Das Automatisierungssystem 301 umfasst einen hier nicht dargestellten Nachrichtenvermittler, der als Reaktion auf das Veröffentlichen der Nachricht 339 das Topic 325 neu anlegt. Dieses Topic ist ein Untertopic vom Topic 321, welches für "Archiv" steht, also die Art des Dienstes bezeichnet, die der erste Kommunikationsteilnehmer 329 anbietet. Das Topic 321 ist insofern selbst ein Untertopic des Topics 319 "Services", also "Dienste".

Ein Untertopic eines Topics steht eine Ebene unter dem Topic.

Der zweite Kommunikationsteilnehmer 331 veröffentlicht beispielsweise eine Nachricht 337 in das Topic 307. Dieses Veröffentlichen ist symbolisch mit einem Pfeil mit dem Bezugszeichen 333 dargestellt.

Der erste Kommunikationsteilnehmer 329 ist mit einem Datenarchiv 341 verbunden, um dort Daten abzulegen, also abzuspeichern.

Der Nachrichtenvermittler erzeugt ein Topic 327, in welchem die Aufträge für den Archivierungsdienst veröffentlicht werden sollen. Die Information, dass Aufträge in dem Topic 327 veröffentlicht werden sollen, ist beispielsweise von der Nachricht 339 umfasst.

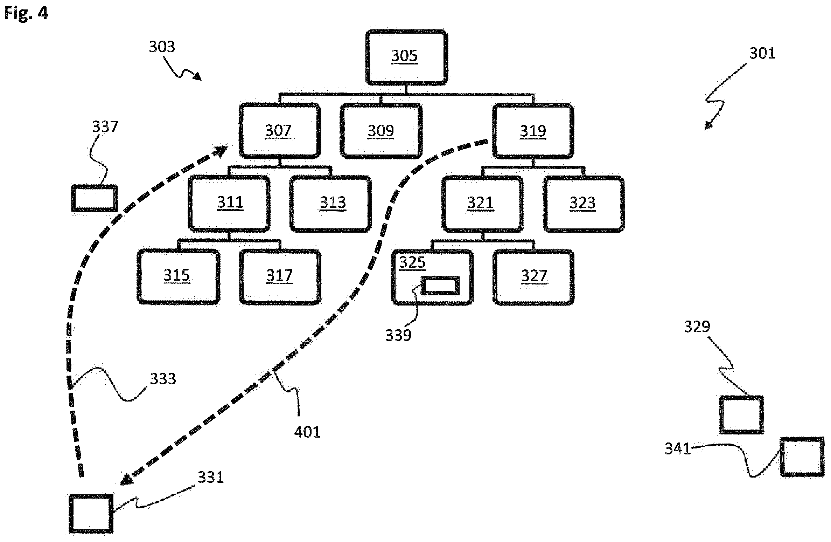

Der zweite Kommunikationsteilnehmer 331 ist für das Thema oder Topic 319 eingetragen. Dieses Eintragen ist symbolisch in Fig. 4 mit einem Pfeil mit dem Bezugszeichen 401 gekennzeichnet.

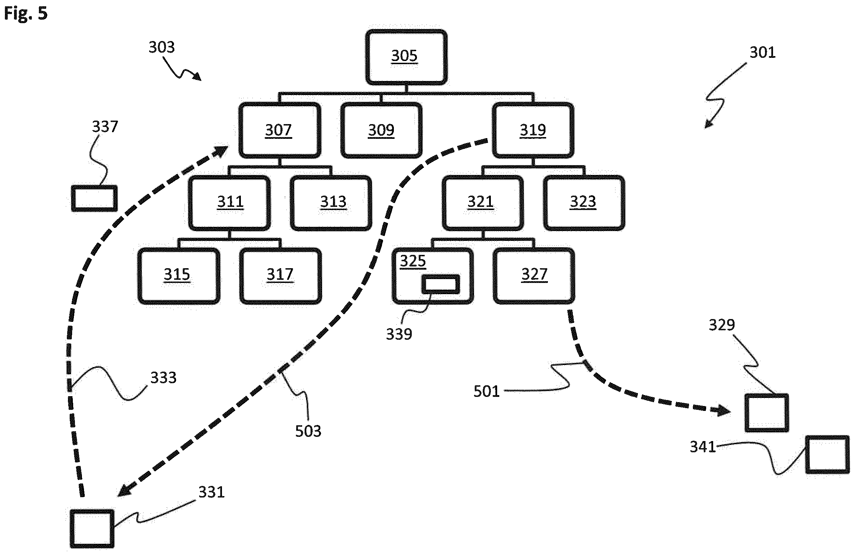

Da der zweite Kommunikationsteilnehmer 331 sich für das übergeordnete Topic 319 eingetragen hat, bekommt er automatisch die Nachricht 339, die für das Topic 325 eingetragen ist, vom Nachrichtenvermittler übermittelt. Dies zeigt symbolisch Fig. 5 durch einen Pfeil mit dem Bezugszeichen 503.

Der erste Kommunikationsteilnehmer 329 trägt sich weiter auf das Topic "Aufträge"327 ein. Dieses Eintragen ist symbolisch mit einem Pfeil mit dem Bezugszeichen 501 dargestellt (vgl. Fig. 5).

Aufträge, die von Kommunikationsteilnehmern in dem Topic 327 veröffentlicht werden, werden somit automatisch mittels des Nachrichtenvermittlers an den ersten Kommunikationsteilnehmer 329 übermittelt.

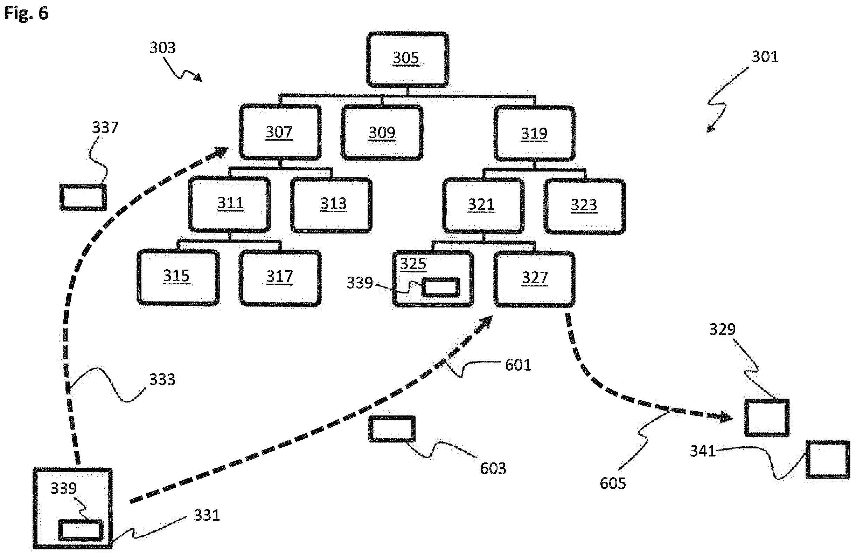

Fig. 6 zeigt exemplarisch, wie der zweite Kommunikationsteilnehmer 331 einen Auftrag 603 in dem Topic 327 veröffentlicht. Der Auftrag gibt beispielsweise an, dass Daten aus dem Topic 307 für eine bestimmte Zeit, beispielsweise eine Stunde, archiviert werden sollen.

Im Topic 307 werden beispielsweise Messdaten einer Sensoreinrichtung veröffentlicht.

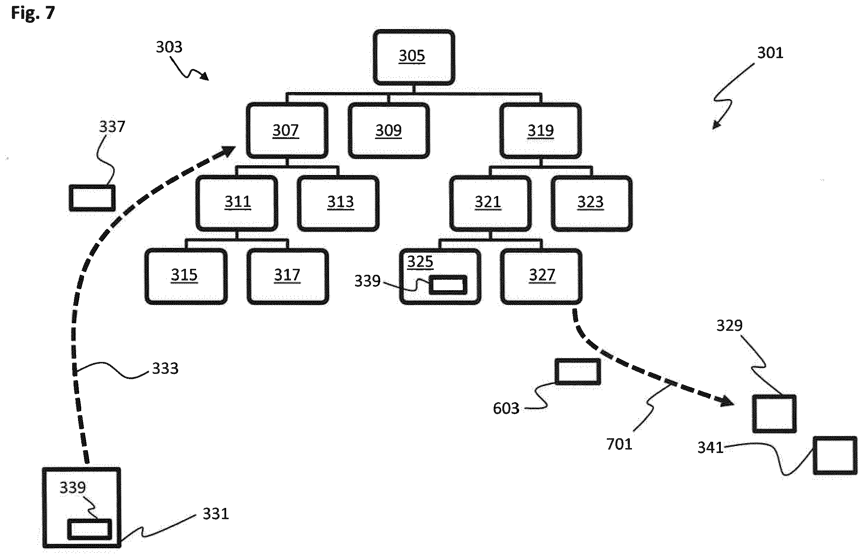

Diesen Auftrag erhält der erste Kommunikationsteilnehmer 329, da er auf dem Topic 327 eingetragen ist. Dies zeigt symbolisch die Fig. 7 durch einen Pfeil mit dem Bezugszeichen 701.

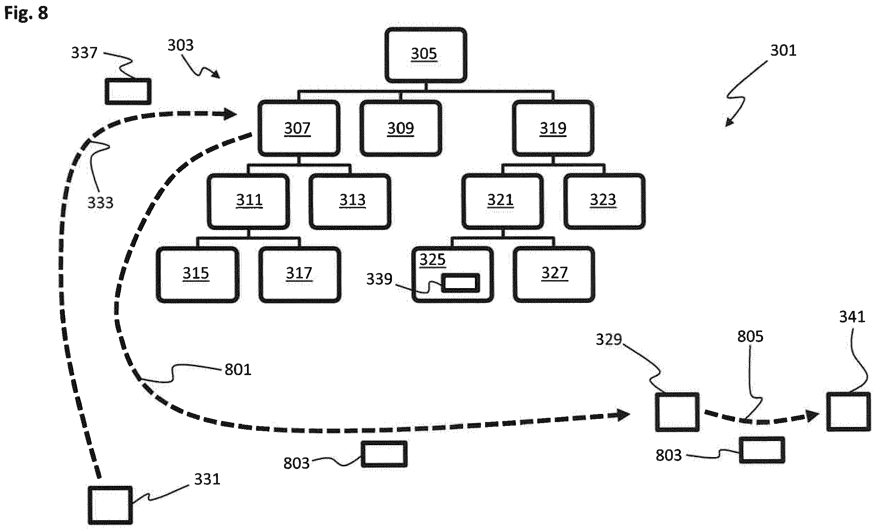

Fig. 8 zeigt exemplarisch, wie sich der erste Kommunikationsteilnehmer 329 auf das Topic 307 gemäß dem Auftrag 603 einträgt, damit er die entsprechenden Daten aus dem Topic 307 erhält. Entsprechend übermittelt dann der Nachrichtenvermittler die entsprechenden Daten des Topics 307 an den ersten Kommunikationsteilnehmer 329. Diese Daten aus dem Topic 307 sind gemäß Fig. 8 mit dem Bezugszeichen 803 bezeichnet.

Der erste Kommunikationsteilnehmer 329 archiviert diese Daten 803 im Datenarchiv 341, was symbolisch mit einem Pfeil mit dem Bezugszeichen 805 dargestellt ist.

Das Archivieren wird beispielsweise nach einer vorbestimmten Dauer beendet, sofern dies im Auftrag angegeben ist.

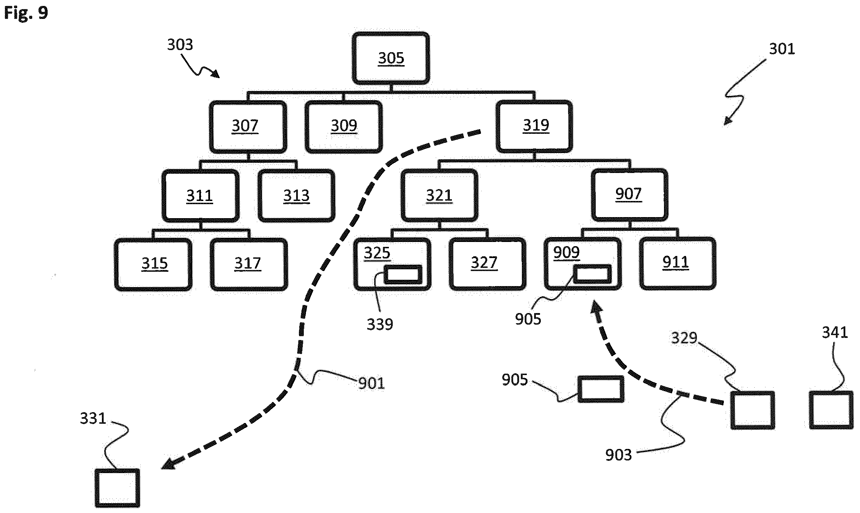

Fig. 9 bis 13 zeigen jeweils ein Blockdiagramm des Automatisierungssystems 301, welches jeweils Schritte in einem weiteren Verfahren zum Steuern einer Nachrichtenübermittlung zwischen Kommunikationsteilnehmern eines Automatisierungssystems zeigt.

Der erste Kommunikationsteilnehmer 329 bietet einen weiteren Dienst an, der im Datenarchiv 341 archivierte Daten anderen Kommunikationsteilnehmern bereitstellen kann. Der weitere Dienst kann beispielsweise als ein Datenbereitstellungsdienst bezeichnet werden.

Der erste Kommunikationsteilnehmer 329 veröffentlicht eine Nachricht 905 über ein angegebenes Thema 909, wie der Datenbereitstellungsdienst genutzt werden kann. Das Thema 909 kann somit als "Beschreibung des Dienstes" respektive "Kommandobeschreibung und/oder Parameterbeschreibung" bezeichnet werden. Dieses Veröffentlichen wird symbolisch mittels eines Pfeils mit dem Bezugszeichen 903 dargestellt.

Der Nachrichtenvermittler legt als Reaktion auf das Veröffentlichen der Nachricht 905 das Topic 909 neu an. Dieses Topic ist ein Untertopic von einem Topic 907, welches für "Datenbereitstellung" steht, also die Art des Dienstes bezeichnet, die der erste Kommunikationsteilnehmer 329 anbietet. Das Topic 907 ist insofern selbst ein Untertopic des Topics 319 "Services", also "Dienste".

Der Nachrichtenvermittler erzeugt ein Topic 911, in welchem die Aufträge für den Datenbereitstellungsdienst veröffentlicht werden sollen. Die Information, dass Aufträge in dem Topic 911 veröffentlicht werden sollen, ist beispielsweise von der Nachricht 905 umfasst.

Der zweite Kommunikationsteilnehmer 331 ist weiterhin für das Topic 319 "Services" abonniert, was symbolisch mit einem Pfeil mit dem Bezugszeichen 901 dargestellt ist.

Da der zweite Kommunikationsteilnehmer 331 auf das Topic 319 abonniert ist, erhält er somit auch automatisch vom Nachrichtenvermittler die Nachricht 905.

Der erste Kommunikationsteilnehmer 329 abonniert zusätzlich zum Topic 327 auch das Topic 911, in welchen die entsprechenden Aufträge veröffentlicht werden, um diese automatisch zu erhalten.

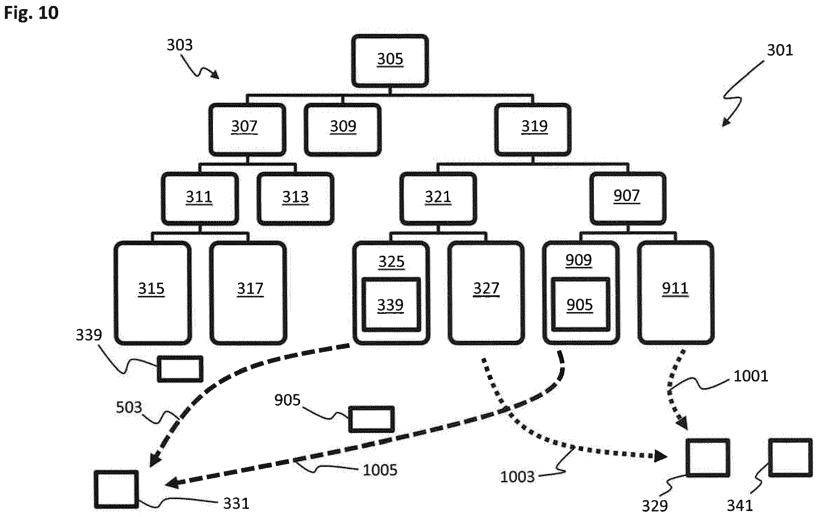

Dieses Abonnieren ist in Fig. 10 symbolisch mit Pfeilen mit den Bezugszeichen 1001 und 1003 dargestellt.

Das Übermitteln der Nachrichten 339 respektive 905 an den zweiten Kommunikationsteilnehmer 331 ist in Fig. 10 symbolisch mit Pfeilen mit den Bezugszeichen 503 respektive 1005 dargestellt.

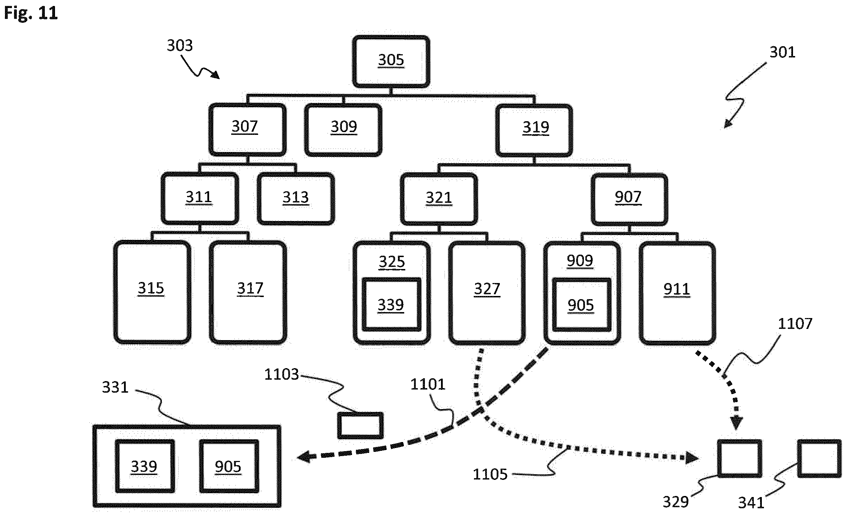

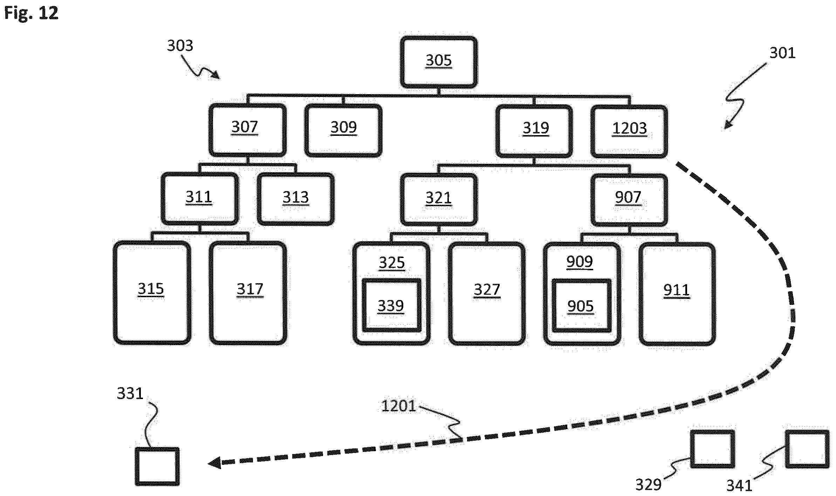

Der zweite Kommunikationsteilnehmer 331 veröffentlicht beispielsweise einen Auftrag 1103 im Topic 911. Der Auftrag 1103 gibt beispielsweise an, dass alle im Datenarchiv 341 archivierten Daten bezüglich des Topics 315, die ein Datum aufweisen, das innerhalb eines bestimmten Zeitraums liegt, in ein Topic 1203 veröffentlicht werden sollen, wobei das Topic 1203 mittels des Nachrichtenvermittlers erzeugt wird (vgl. Fig. 11 und 12).

Das Veröffentlichen des Auftrags 1103 ist in Fig. 11 symbolisch mit einem Pfeil mit dem Bezugszeichen 1101 dargestellt.

Der erste Kommunikationsteilnehmer 329 erhält aufgrund des entsprechenden Abonnements automatisch Aufträge, die in den Topics 327 und 911 veröffentlicht wurden. Dieses Übermitteln mittels des Nachrichtenvermittlers an den ersten Kommunikationsteilnehmer 329 ist in Fig. 11 symbolisch mit einem Pfeil mit dem Bezugszeichen 1105 und 1107 dargestellt.

Fig. 12 zeigt, dass sich der zweite Kommunikationsteilnehmer 331 für das Topic 1203 abonniert hat, um Daten, die der erste Kommunikationsteilnehmer dort veröffentlicht hat, zu erhalten.

Dieses Abonnieren ist in Fig. 12 symbolisch mit einem Pfeil mit dem Bezugszeichen 1201 dargestellt.

Der erste Kommunikationsteilnehmer 329 liest gemäß dem Auftrag 1103 die entsprechenden Daten 1301 aus dem Datenarchiv 341 aus und veröffentlicht diese im Topic 1203, von welchem die Daten 1301 mittels des Nachrichtenvermittlers an den zweiten Kommunikationsteilnehmer 331 übermittelt werden.

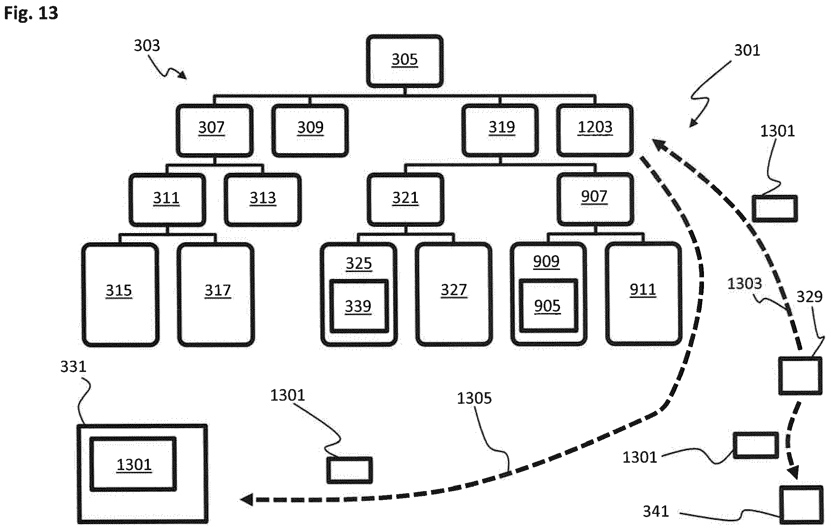

Das Veröffentlichen der Daten 1301 im Topic 1203 ist in Fig. 13 symbolisch mit einem Pfeil mit dem Bezugszeichen 1303 dargestellt.

Das Übermitteln der Daten aus dem Topic 1203 an den zweiten Kommunikationsteilnehmer 331 ist in Fig. 13 symbolisch mit einem Pfeil mit dem Bezugszeichen 1305 dargestellt.

Für die einzelnen Schritte des Veröffentlichens respektive Eintragens werden auf den entsprechenden Kommunikationsteilnehmern eine oder mehrere Publisher-Anwendungen und/oder eine oder mehrere Subscriber-Anwendungen ausgeführt.

Das erfindungsgemäße Konzept wird im Folgenden weiter anhand einer Briefstation, auf welche mehrere Kommunikationsteilnehmer eines Automatisierungsnetzwerks Zugriff haben, weiter erläutert.

Für die nachfolgenden Ausführungen bezeichnen die IoT-Clients Kommunikationsteilnehmer. Ein Dienst-anbietender IoT-Client ist ein erster Kommunikationsteilnehmer gemäß dieser Beschreibung. Ein Dienst-nehmender IoT-Client ist ein zweiter Kommunikationsteilnehmer gemäß dieser Beschreibung. Der Message Broker entspricht dem Nachrichtenvermittler.

Ferner wird für den deutschen Begriff "Veröffentlichen" in den nachfolgenden Ausführungen der englische Begriff "Publish" verwendet. Für den deutschen Begriff "Abonnieren" wird nachfolgend der englische Begriff "Subscribe" verwendet.

Der Begriff "Topic" entspricht dem Begriff "Thema" gemäß dieser Beschreibung. Ein Storage Provider beschreibt einen Archivierungsdienst.

Ein Dienst kann auch als ein "Service" bezeichnet werden.

Für die Kommunikation von diversen IoT Clients über einen Message Broker wird die Topic Struktur (Baumstruktur oder Themenbaum) so definiert, dass sie für die Automatisierungstechnik als zentrale Kommunikationsverwaltungsstruktur verwendet werden kann. IoT Clients können so nicht nur Daten senden und empfangen, sondern auch beliebige Dienste wie zum Beispiel eine Langzeitarchivierung von Daten für andere IoT Clients, welche beispielsweise Daten analysieren (, was beispielsweise ebenfalls ein Service (Dienst) sein kann), anbieten.

Ein Topic "Service" weist beispielsweise als Untertopics ein Topic "Kommandobeschreibung" und ein Topic "Ergebnis" auf. Im Topic "Kommandobeschreibung" ist die Information veröffentlicht, welche Kommandos (und beispielsweise zusätzlich, welche Parameter) der Dienst erwartet. Im Topic "Ergebnis" werden die Ergebnisses, also der Output, des Dienstes veröffentlicht. Das Topic "Kommandobeschreibung" kann beispielsweise als ein "Command"-Topic bezeichnet werden. Das Topic "Ergebnis" kann beispielsweise als ein "Result"-Topic bezeichnet werden.

Ein Dienst-anbietender IoT Client published die möglichen Dienste und ihre Beschreibung zu einem durch beispielsweise Keywords (Schlüsselwörter) definierten Topic am Message Broker. Gleichzeitig kennt der Dienst-anbietende IoT Client das Topic, auf dem ein Dienst-nehmender IoT Client ein Kommando zur Ausführung eines Dienstes publishen würde (wieder aufgrund der Keywords). Auf dieses Command-Topic subscribed sich der Dienst-anbietende IoT Client automatisch. Beispielsweise kann das Command-Topic auch ein Sub-Topic des Dienst-Topics sein, muss es aber nicht. In einem Command-Topic können beispielsweise auch Result-Topics angegeben werden, in denen die Ergebnisse der ausgeführten Dienste hinterlegt werden können. Grundsätzlich erfolgt die Identifikation von relevanten Topics an einem beliebigen Message Broker über Keywords oder eine Verschachtelung von Keywords innerhalb der Topic-Architektur.

Die Keywords werden den IoT Clients beispielsweise zuvor bekannt gemacht. IoT Clients sind insbesondere in der Lage sich auf alle Topics eines Message Brokers zu subscriben, so können sie in vorteilhafter Weise nach Keywords und Topic-Strukturen suchen.

Der Dienst-nehmende IoT Client subscribed sich beispielsweise automatisch auf Topics, an denen Dienste angeboten werden. Dadurch weiß der Dienst-nehmende IoT Client, welche Dienste angeboten werden, wie die Dienste aufgebaut sind und was diese für Kommandos und Parameter erwarten. Des Weiteren weiß der Dienst-nehmende IoT Client, an welches Topic er sein Kommando zur Ausführung des Dienstes publishen muss (wie bereits beschrieben, hat sich der Dienst-anbietende IoT Client automatisch auf dieses Topic subscribed).

Durch die Festlegung dieser Kommunikationsstrukturen können IoT Clients über einen zentralen Message Broker Daten, Dienste und auch Kommandos austauschen. Dies ist ein besonderer Vorteil, da für eine direkte Kommunikation von IoT Client zu IoT Client bei einer Publisher/Subscriber Kommunikation zunächst keine Regeln definiert sind.

Da in der Automatisierungstechnik typischerweise in schnellen Zyklen Daten ausgetauscht werden, ist es für die IoT-Kommunikation sinnvoll - wenn auch nicht notwendig - Daten in einem Binär-Format auszutauschen. Die zuvor beschriebene Architektur der Topics und der darüber ermöglichte Zugang zu Services von diversen IoT Clients sind auch bei der Nutzung anderer Datenformate gültig.

Sollte jedoch für höchste Performance-Ansprüche eine Binär-Zeichenkette gewählt werden, ist beispielsweise die Nutzung von Retain-Topics eines Message Brokers eines Automatisierungssystems vorgesehen, da in diesem Fall eine Datenbeschreibung der Binär-Zeichenkette zugänglich gemacht werden muss.

Ein Retain-Topic bezeichnet einen Topic, in welchem Nachrichten gespeichert bleiben, auch wenn sich momentan keine Subscriber-Anwendung für das Topic subscribed hat.

Nur so ist für jeden IoT Client eine einwandfreie Interpretation der Daten möglich. Die Datenbeschreibung wird vom Daten-Erzeuger in ein Retain-Topic published. Dass es sich um ein Retain-Topic handelt, wird dem Message Broker über einen entsprechenden Hinweis in der Nachricht mitgeteilt. Die Daten des Retain-Topics werden im Gegensatz zu Daten anderer normaler Topics weiter vom Message Broker gehalten, auch wenn sich kein anderer IoT Client aktuell für die Daten interessiert, also "subscribed" ist. So kann sich ein auf normale Topics verbindender IoT Client (Daten-Empfänger) immer auf eine aktuell gültige Datenbeschreibung für die Binär-Zeichenkette subscriben. Retain-Topics können auch Sub-Topics von normalen Topics sein, wodurch die Beschreibung von Daten auch unter dem eigentlichen Daten-Topic liegen kann - sie kann aber auch davon losgelöst sein.

Wenn die Datenbeschreibung in einem Retain Topic liegt, kann in vorteilhafter Weise der Kommunikationsaufwand deutlich reduziert werden. Der Daten-Erzeuger muss die Beschreibung nur einmal senden und der Daten-Empfänger muss sie sich nur einmal anschauen, um dann fortlaufend die Daten interpretieren zu können. Die Datenbeschreibung ist allerdings beispielsweise nur so lange gültig, bis es auf dem Daten-Erzeuger (zum Beispiel eine Steuerungseinheit oder eine Steuerungseinrichtung) zu einer entsprechenden Änderung der Datenbeschreibung kommt.

In einem Automatisierungssystem können das bei Steuerungseinheiten beispielsweise neue Code-Downloads oder sogenannte Online-Änderungen sein. Online-Änderungen sind beispielsweise Änderungen des Steuerungsprogramms, welche während des Betriebs der Steuerungseinheit durchgeführt werden. Durch diese Aktionen gibt es eine neue Datenbeschreibung, die der Datenerzeugende IoT Client direkt wieder auf das Retain-Topic published. Dort wird dann die Datenbeschreibung aktualisiert und jeder IoT Client, der sich zuvor auf die Datenbeschreibung subscribed hat, wird entsprechend informiert. Die korrekte Interpretation der Daten ist dadurch auch bei Änderungen der Datenbeschreibung gewährleistet.

Das erfindungsgemäße Konzept soll im Folgenden weiter am Beispiel eines Datenarchiv-Anbieters erläutert werden. Der Datenarchiv-Anbieter wird nachfolgend mit dem englischen Begriff "Storage provider" bezeichnet.

Eine Maschinensteuerung ist als IoT Client konfiguriert. Nach der Aktivierung des Automatisierungssystems wird die Kommunikation mit einem IoT Message Broker in einem Netzwerk aufgenommen. Die Maschinensteuerung published zyklisch Daten in einem Binär-Format an ein normales Topic am Message Broker. Dieses Topic kann beispielsweise so aussehen: "Maschinenbauer/Kunde5/Maschine18/Transportsystem/Daten". Dazu published die Maschinensteuerung zunächst einmalig eine gültige Beschreibung der Daten an ein Retain-Topic. Diese Beschreibung ist notwendig, um anderen IoT Clients eine Interpretation der Binärdaten zu ermöglichen.

Der Storage Provider ist ein IoT Client, der als Gateway zu verschiedenen Storages (Datenarchiven) fungiert. Auch er verbindet sich auf den Message Broker und bietet dort Dienste an, die er in einem festgelegten Service-Topic angibt, wie bspw.: "CSP_Maschinenbauer/Kunde5/Storage/Services". In weiteren Sub-Topics kann er eine Beschreibung der Dienste hinterlegen oder Kommandos von anderen IoT Clients empfangen. So müssen andere IoT Clients im Vorfeld nicht wissen, welche Dienste angeboten werden, sondern können diese ohne Vorkenntnisse auslesen. In diesem Beispiel bietet der Storage Provider die Dienste RecordData (Datenarchivierung) und GetHistoricalData (Archivdatenbereitstellen) an.

Ein dritter IoT Client ist ein Analyse-PC. Der Analyse-PC verbindet sich ebenfalls mit dem Message Broker. Er kann auf Basis von festgelegten Keywords in der Topic-Architektur unter anderem die Dienst- und Beschreibungs-Topics des Storage Providers und die Daten- und Beschreibungs-Topics der Maschinensteuerung finden. Der Analyse-PC sieht so, dass der Storage Provider unter anderem einen RecordData Dienst anbietet. So kann der Analyse-PC jetzt auslesen, wie der Dienst beschrieben ist und welche Kommandos und Parameter er erwartet. Für RecordData erwartet er beispielsweise zwei Parameter: StartRecord zum Start der Aufnahme und das Topic der aufzunehmenden Daten.

In einem "Beschreibungs"-Topic werden beispielsweise die Kommandos (also die Kommandobeschreibung) und/oder die Parameter (also die Parameterbeschreibung) veröffentlicht, die der Dienst zu seiner Nutzung erwartet. Das "Beschreibungs"-Topic kann also als ein kombinierter "Kommando"/"Parameter"-Topic bezeichnet werden.

Also schickt der Analyse-PC ein StartRecord (englisches Kommando für: "Starte das Archivieren") und das Topic "Maschinenbauer/Kunde5/Maschine18/Transportsystem/Daten" der Maschinensteuerung an das Topic "CSP_Maschinenbauer/Kunde5/Storage/Services/RecordData/Command". Der Storage Provider erwartet aufgrund seiner Service-Beschreibung genau an diesem Topic die Kommandos und hat sich automatisch darauf subscribed. Die Datenbeschreibung kann der Storage Provider automatisch aufgrund der Keywords bevorzugt in einem Sub-Topic des Daten-Topics identifizieren.

Alternativ oder zusätzlich kann dies ein dritter Parameter in dem empfangenen Kommando sein. Der Storage Provider subscribed sich nun auf die Daten, die von der Maschinensteuerung zum Message Broker published werden, und legt sie beispielsweise bis zu dem Erhalt eines StopRecord Kommandos kontinuierlich in den nachgeschalteten Storage, wo er auch zunächst einmalig die Datenbeschreibung hinterlegt.

Möchte der Analyse-PC nun historische Daten auswerten, kann er ein Kommando an den Service "GetHistoricalData" (englisches Kommando für: "stelle archivierte Daten bereit") respektive an das entsprechende Command-Topic des Storage Providers schicken. Auch hier gibt es beispielsweise individuell mögliche Parameter, welche übergeben werden können. Für einen GetHistoricalData Service können dies beispielsweise sein:
- Daten (zum Beispiel Auswahl zuvor aufgezeichneter Variablen),
- Zeitraum (zum Beispiel von 12 Uhr am 05.01.2016 bis 12 Uhr am 07.01.2016),
- Result-Topic, in das der Storage Provider die Daten aus dem Storage publishen soll.

Der Analyse-PC published das Kommando und subscribed sich sogleich auf das von ihm selbst im Kommando erwähnte Result-Topic, um dort die Daten vom Storage Provider zu empfangen. Auf der Seite des Storage Providers findet der gleiche Mechanismus wie bei dem Dienst RecordData statt, allerdings holt er dieses Mal Daten aus dem Storage, um sie in das Result-Topic zu publishen, anstatt Daten in den Storage reinzuschreiben.

Wenn sich jetzt ohne jeglichen Informationsaustausch die Datenbeschreibung auf der Maschinensteuerung ändert, können alle anderen IoT Clients, die mit den Daten der Maschinensteuerung gearbeitet haben, diese ab dem Zeitpunkt der Änderung nicht mehr fehlerfrei oder gar nicht mehr interpretieren. Daher ist es vorgesehen, bei Änderungen die Datenbeschreibung auf dem Retain-Topic zu aktualisieren. Wird beispielsweise eine in einem Automatisierungssystem übliche Online-Änderung des Steuerungsprogramms durchgeführt, ändert sich die Datenbeschreibung. Die Maschinensteuerung published dann die aktualisierte Beschreibung an das Retain-Topic. Dieses wird immer noch von dem Message Broker gehalten und die anderen IoT Clients sind nach wie vor auf das Topic subscribed. Die Datenbeschreibung wird am Retain-Topic überschrieben, alle subscribeden IoT Clients erhalten eine Kopie der neuen Beschreibung. Der Storage Provider würde dies beispielsweise erkennen und in seinem Storage ab dem entsprechenden Zeitpunkt eine neue Datenbeschreibung zusätzlich ablegen. So können immer korrekt die Daten interpretiert und auch nach einer Datenbeschreibungs-Änderung fehlerfrei historische Daten über den zentralen Message Broker an den Analyse-PC kommuniziert werden.

Das erfindungsgemäße Konzept wird weiter anhand einer Briefstation näher erläutert, wobei die im Zusammenhang mit der Briefstation beschriebenen Topics respektive Nachrichten als Platzhalter für Topics respektive Nachrichten stehen, wie sie im Zusammenhang mit Automatisierungssystemen und dessen Elemente verwendet werden, also zum Beispiel: Maschine, Fehlermeldungen, Datenarchivierung (vgl. auch Ausführungen weiter oben).

Es ist beispielsweise vorgesehen, dass es Nutzer (IoT-Clients) einer Briefstation gibt, die anderen Nutzern einen Service anbieten möchten. Beispielsweise ist zum Beispiel ein Brief-Archivierungs-Service *Archive* vorgesehen. Der Nutzer bietet also an, auf Anfrage alle Briefe eines Themenbereichs zu archivieren. Da sich die Nutzer untereinander nicht kennen und keine direkte Nutzer-zu-Nutzer-Kommunikation möglich ist, erstellt der Service einen Brief, in dem er seinen Service beschreibt, und legt (published) diesen in ein explizites Service-Postfach (Topic *"Service*")*.* Die anderen Nutzer können sich in diesem Servicepostfach über angebotene Services informieren, indem sie das Postfach abonnieren (sich darauf subscriben) und so die neusten Service-Beschreibungs-Briefe zugestellt bekommen. Sie wissen natürlich, dass dieses Service-Postfach existiert, unter welchem Topic oder welcher definierten Topic-Struktur sie es finden und wie sie damit umgehen können.

Der Brief, in dem der Service-Anbieter seinen Archivierungs-Service beschreibt, umfasst beispielsweise alle für einen potentiellen Nutzer relevanten Informationen, sodass dieser den Service ohne Vorwissen nutzen kann. Elementar sind dabei Informationen über Name und Standort des Postfachs (also das Topic), in dem ein Auftrag erteilt werden kann und über die Parameter, die zur Durchführung des Auftrags benötigt werden (bspw. Start-Zeitpunkt, Zeitraum der Archivierung, zu archivierendes Topic). Möchte ein Nutzer den Archivierung-Service in Anspruch nehmen, um beispielsweise alle Briefe zum Topic *Tiere* archivieren zu lassen, legt er einen Auftragsbrief mit den benötigten Informationen in das angegebene Auftrags-Erteilungs-Postfach. Dieses Postfach ist praktischerweise ein "Unter-Postfach" (Sub-Topic) des Archivierungs-Service-Postfachs und hat somit eine Adresse wie beispielsweise *Briefstation*/*Services*/*Archive*/*Aufträge.*

Der Service-Anbieter hat dieses Aufträge-Postfach abonniert, sodass er die Auftragserteilung mitbekommt. Er startet dann zum angegebenen Zeitpunkt mit der Archivierung der angegebenen Themen. Wo und auf welche Weise der Archivierungsservice die Archivierung durchführt, weiß der Nutzer nicht. Jedenfalls abonniert der Archivierungs-Service nun alle Briefe zum angegebenen Thema und legt Kopien davon sortiert in seinem Archiv (Datenbank) ab.

Beispielsweise ist vorgesehen, dass der Nutzer den Dienst stoppen möchte. Auch dies tut er über das Aufträge-Postfach. Dann ist es natürlich sinnvoll, dass der Serviceanbieter einen weiteren Service anbietet, mit dem ein Nutzer Zugriff auf die archivierten Daten - oder einen ausgewählten Teil davon - erhalten kann. Ein solcher Zugriff kann aber weiterhin nicht direkt erfolgen: Der Nutzer kann weder direkt auf die Archivierungsdatenbank zugreifen, noch direkt mit dem Nutzer kommunizieren - das geht nur über einen zentralen Knotenpunkt, die Briefstation.

Der Serviceanbieter bietet also den Service GetArchived an. Er muss vom Nutzer erfahren, welche Briefe aus welchem Zeitraum angefragt werden und in welches (neue) Postfach er die Daten legen soll. Der Nutzer gibt in seinem Auftragsbrief beispielsweise an, dass er alle Briefe vom 11.07.2016, 0:00 Uhr bis zum 12.07.2016, 9:00 Uhr zum Thema *Briefstation*/*Natur*/*Tiere*/*Schmetterlinge* erhalten möchte. Es ist anzumerken, dass zuvor alle Briefe zum Thema *Briefstation*/*Natur*/*Tiere* archiviert wurden und der Archivierer somit sein Archiv so aufbauen muss, dass er auch einzelne Unterthemen wiederfindet und ausgeben kann.

Als Ziel-Postfach nennt der Nutzer das Postfach *Briefstation*/*MeineAltenBriefe* und abonniert (subscribed) dieses zugleich. Der *GetArchived-Service* erhält den Auftragsbrief und beginnt gleich damit, die passenden archivierten Briefe herauszusuchen und Kopien davon in das Postfach *MeineAltenBriefe* zu legen.

Nun ist es beispielsweise vorgesehen, dass der *GetArchived-*Service die Briefe einzeln in der richtigen Reihenfolge und gegebenenfalls in einer hohen Geschwindigkeit in das Postfach *MeineAltenBriefe* legt. Eine weitaus schnellere Ausführungsform ist, dass der *GetArchived-Service* mehrere Briefe gebündelt in einem Paket an das Postfach schickt, sodass die Geschwindigkeit nochmal um ein Vielfaches erhöht werden kann.

Auch ein anderer Nutzer kann die archivierten Briefe vom Archivierungs-Service abrufen.

In einer weiteren Ausführungsform ist vorgesehen, dass ein Service-Anbieter seinen Service nicht in einem Service-Postfach anbietet, sondern direkt an die Postfächer 'anhängt', für die er seinen Service anbieten kann. Im Falle des Archivierungsservice legt also ein Nutzer regelmäßig Briefe zu einem Thema in das entsprechende Postfach ab und sucht in dem entsprechenden Postfach nach einem Service. Diesen kann er dann in der wie oben beschriebenen Weise nutzen, wobei er weniger Parameter angeben müsste. Welcher der beiden beschriebenen Ausführungsformen besser geeignet ist, hängt insbesondere von der Art des Service ab.

Zusammenfassend stellt die Erfindung ein Konzept zum effizienten Bereitstellen und effizienten Nutzen von Diensten durch IoT-Clients für die Automatisierung, also für ein Automatisierungssystem, basierend auf einer Publisher/Subscriber-Kommunikation bereit.

## Patentansprüche

1. Verfahren zum Steuern einer Nachrichtenübermittlung zwischen Kommunikationsteilnehmern (203) eines Automatisierungssystems (201, 301), wobei auf den Kommunikationsteilnehmern (203) jeweils eine oder mehrere Publisher-Anwendungen und/oder eine oder mehrere Subscriber-Anwendungen ausgeführt werden, wobei das Automatisierungssystem (201, 301) einen Nachrichtenvermittler (209) umfasst, der ausgebildet ist, Abonnements für angegebene Themen für benannte Subscriber-Anwendungen in einen Themenbaum einzutragen, umfassend die folgenden Schritte:
- als Reaktion darauf, dass eine Nachricht (339) über ein angegebenes Thema (305, ..., 327) des Themenbaums von einer Publisher-Anwendung eines ersten (205, 329) der mehreren Kommunikationsteilnehmer (203) veröffentlicht wurde,
- Ermitteln (101) mittels des Nachrichtenvermittlers (209), ob eine Subscriber-Anwendung eines zweiten (207, 331) der mehreren Kommunikationsteilnehmer (203) für das angegebene Thema (305, ..., 327) eingetragen ist oder nicht,
- wenn eine Subscriber-Anwendung für das angegebene Thema (305, ..., 327) eingetragen ist, Übermitteln (103) einer Nachricht (339) mittels des Nachrichtenvermittlers (209) an die eingetragene Subscriber-Anwendung des zweiten Kommunikationsteilnehmers (207, 331)
**dadurch gekennzeichnet, dass**
der erste Kommunikationsteilnehmer (205, 329) einen oder mehrere Dienste anbietet, wobei die Nachricht von der Publisher-Anwendung des ersten Kommunikationsteilnehmers (205, 329) die Information umfasst, in welchem Thema des Themenbaums, Aufträge für den einen oder die mehreren Dienste veröffentlicht werden sollen, umfassend ferner die folgenden Schritte:
- Eintragen mittels des Nachrichtenvermittlers (209) eines mittels einer Subscriber-Anwendung des ersten Kommunikationsteilnehmers (205, 329) erzeugten Abonnements für dasjenige Thema (305, ..., 327), in welchem Thema des Themenbaums Aufträge für den einen oder die mehreren Dienste veröffentlicht werden sollen,
- als Reaktion darauf, dass eine Nachricht über dasjenige Thema (305, ..., 327) des Themenbaums, in welchem Aufträge für den einen oder die mehreren Dienste veröffentlicht werden sollen, von einer Publisher-Anwendung des zweiten Kommunikationsteilnehmers (207, 331) veröffentlicht wurde, dass dem einen oder den mehreren Diensten entsprechender Auftrag (603) ausgeführt werden soll, Übermitteln mittels des Nachrichtenvermittlers (209) der veröffentlichten Nachricht, dass dem einen oder den mehreren Diensten entsprechender Auftrag (603) ausgeführt werden soll, an die eingetragene Subscriber-Anwendung des ersten Kommunikationsteilnehmers (205, 329).

2. Verfahren nach Anspruch 1, wobei der Auftrag angibt, dass Nachrichten aus einem bestimmten Thema (305, ..., 327) des Themenbaums mittels des oder der Dienste verarbeitet werden sollen, umfassend ferner die folgenden Schritte:
- als Reaktion darauf, dass mittels einer Subscriber-Anwendung des ersten Kommunikationsteilnehmers (205, 329) ein Abonnement für das bestimmte Thema (305, ..., 327) erzeugt wurde,
- Eintragen der Subscriber-Anwendung des ersten Kommunikationsteilnehmers (205, 329) für das bestimmte Thema (305, ..., 327) mittels des Nachrichtenvermittlers (209),
- Übermitteln der Nachrichten über das bestimmte Thema (305, ..., 327) an die Subscriber-Anwendung des ersten Kommunikationsteilnehmers (205, 329) mittels des Nachrichtenvermittlers (209).

3. Verfahren nach einem der vorherigen Ansprüche, wobei der Auftrag angibt, dass mittels des ersten Kommunikationsteilnehmers (205, 329) verarbeitete Daten für ein vorgegebenes Thema (305, ..., 327) des Themenbaums veröffentlicht werden sollen, umfassend den folgenden Schritt:
- als Reaktion darauf, dass eine die verarbeiteten Daten umfassende Nachricht über das vorgegebene Thema (305, ..., 327) von einer Publisher-Anwendung des ersten Kommunikationsteilnehmers (205, 329) veröffentlicht wurde, Übermitteln der die verarbeiteten Daten umfassende Nachricht an eine für das vorgegebene Thema (305, ..., 327) eingetragene Subscriber-Anwendung des zweiten Kommunikationsteilnehmers (207, 331) mittels des Nachrichtenvermittlers (209).

4. Verfahren nach einem der vorherigen Ansprüche, wobei die Nachricht, dass der erste Kommunikationsteilnehmer (205, 329) einen oder mehrere Dienste anbietet, eine Kommandobeschreibung umfasst, die angibt, welche Kommandos der oder die Dienste erwarten, und/oder eine Parameterbeschreibung umfasst, die angibt, welche Parameter der oder die Dienste erwarten, umfassend den folgenden Schritt:
- Übermitteln der Kommandobeschreibung und/oder der Parameterbeschreibung an die eingetragene Subscriber-Anwendung des zweiten Kommunikationsteilnehmers (207, 331) mittels des Nachrichtenvermittlers (209).

5. Verfahren nach einem der vorherigen Ansprüche, umfassend den folgenden Schritt:
- als Reaktion darauf, dass eine Nachricht von einer Publisher-Anwendung eines der Kommunikationsteilnehmer (203) über ein Thema (305, ..., 327) veröffentlicht wurde, wobei die Nachricht eine Datenbeschreibung umfasst, wie Daten des einen der Kommunikationsteilnehmer (203) interpretiert werden müssen, Speichern der Datenbeschreibung mittels des Nachrichtenvermittlers (209).

6. Verfahren nach einem der vorherigen Ansprüche soweit rückbezogen auf Anspruch 5 und auf Anspruch 2, wobei das bestimmte Thema (305, ..., 327) des Themenbaums dem der Nachricht entsprechenden Thema (305, ..., 327) des einen der Kommunikationsteilnehmer (203) entspricht, umfassend den folgenden Schritt:
- Übermitteln der Datenbeschreibung an die Subscriber-Anwendung des ersten Kommunikationsteilnehmers (205, 329) mittels des Nachrichtenvermittlers (209).

7. Verfahren nach einem der vorherigen Ansprüche, wobei die Nachrichten in einem Binär-Format vorliegen.

8. Verfahren nach einem der vorherigen Ansprüche, wobei der oder die Dienste ausgewählt aus der folgenden Gruppe von Diensten sind: Archivierung, Datenanalyse, Zustandsüberwachung.

9. Verfahren nach einem der vorherigen Ansprüche, wobei die mehreren Kommunikationsteilnehmer (203) ausgewählt aus der folgenden Gruppe von Kommunikationsteilnehmern (203) sind: Aktoreinrichtung, Sensoreinrichtung, Steuerungseinrichtung, Maschinensteuerungseinrichtung, Datenbankserver, Datensicherungs-Server.

10. Nachrichtenvermittler (209) für ein Automatisierungssystem (201, 301), wobei der Nachrichtenvermittler (209) ausgebildet ist, das Verfahren nach einem der vorherigen Ansprüche durchzuführen.

11. Automatisierungssystem (201, 301), umfassend mehrere Kommunikationsteilnehmer (203) und den Nachrichtenvermittler (209) nach Anspruch 10.

12. Computerprogramm, umfassend Programmcode zur Durchführung des Verfahrens nach einem der Ansprüche 1 bis 9, wenn das Computerprogramm auf einem Computer, insbesondere auf einem Nachrichtenvermittler (209), ausgeführt wird.

## Claims

1. Method for controlling a message transmission between communication stations (203) of an automation system (201, 301), wherein one or more publisher applications and/or one or more subscriber applications are executed on each of the communication stations (203), wherein the automation system (201, 301) comprises a message broker (209) configured to record subscriptions for specified topics for designated subscriber applications in a topic tree, comprising the following steps:
- in response to a message (339) about a specified topic (305, ..., 327) of the topic tree having been published by a publisher application of a first (205, 329) of the multiple communication stations (203),
- ascertaining (101) by means of the message broker (209) whether or not a subscriber application from a second (207, 331) of the multiple communication stations (203) is recorded for the specified topic (305, ..., 327) ,
- if a subscriber application is recorded for the specified topic (305, ..., 327) , transmitting (103) a message (339) by means of the message broker (209) to the recorded subscriber application of the second communication station (207, 331),
**characterized in that**
the first communication station (205, 329) provides one or more services, wherein the message from the publisher application of the first communication station (205, 329) comprises the information concerning that topic of the topic tree in which orders for the one or more services are supposed to be published, further comprising the following steps:
- recording, by means of the message broker (209), a subscription, produced by means of a subscriber application of the first communication station (205, 329), for that topic (305, ..., 327) in which topic of the topic tree orders for the one or more services are supposed to be published,
- in response to a message about that topic (305, ..., 327) of the topic tree in which orders for the one or more services are supposed to be published having been published by a publisher application of the second communication station (207, 331), that order (603) corresponding to the one or more services is supposed to be performed, transmitting, by means of the message broker (209), the published message that the order (603) corresponding to the one or more services is supposed to be performed to the recorded subscriber application of the first communication stations (205, 329).

2. Method according to Claim 1, wherein the order specifies that messages from a specific topic (305, ..., 327) of the topic tree are supposed to be processed by means of the service or services, further comprising the following steps:
- in response to a subscription for this specific topic (305, ..., 327) having been produced by means of a subscriber application of the first communication station (205, 329),
- recording the subscriber application of the first communication station (205, 329) for the specific topic (305, ..., 327) by means of the message broker (209),
- transmitting the messages about the specific topic (305, ..., 327) to the subscriber application of the first communication station (205, 329) by means of the message broker (209) .

3. Method according to either of the preceding claims, wherein the order specifies that data processed by means of the first communication station (205, 329) are supposed to be published for a prescribed topic (305, ..., 327) of the topic tree, comprising the following step:
- in response to a message, comprising the processed data, about the prescribed topic (305, ..., 327) having been published by a publisher application of the first communication station (205, 329), transmitting the message comprising the processed data to a subscriber application, recorded for the prescribed topic (305, ..., 327) , of the second communication station (207, 331) by means of the message broker (209).

4. Method according to one of the preceding claims, wherein the message that the first communication station (205, 329) provides one or more services comprises a command description specifying which commands the service or services expect(s), and/or comprises a parameter description specifying which parameters the service or services expect(s), comprising the following step:
- transmitting the command description and/or the parameter description to the recorded subscriber application of the second communication station (207, 331) by means of the message broker (209).

5. Method according to one of the preceding claims, comprising the following step:
- in response to a message having been published by a publisher application of one of the communication stations (203) about a topic (305, ..., 327) , wherein the message comprises a data description for how data of the one of the communication stations (203) need to be interpreted, storing the data description by means of the message broker (209).

6. Method according to one of the preceding claims insofar as they refer back to Claim 5 and to Claim 2, wherein the specific topic (305, ..., 327) of the topic tree corresponds to that topic (305, ..., 327) of the one of the communication stations (203) that corresponds to the message, comprising the following step:
- transmitting the data description to the subscriber application of the first communication station (205, 329) by means of the message broker (209) .

7. Method according to one of the preceding claims, wherein the messages exist in a binary format.

8. Method according to one of the preceding claims, wherein the service or services are selected from the following group of services: archiving, data analysis, state monitoring.

9. Method according to one of the preceding claims, wherein the multiple communication stations (203) are selected from the following group of communication stations (203): actuator device, sensor device, control device, machine control device, database server, data security server.

10. Message broker (209) for an automation system (201, 301), wherein the message broker (209) is configured to perform the method according to one of the preceding claims.

11. Automation system (201, 301), comprising multiple communication stations (203) and the message broker (209) according to Claim 10.

12. Computer program, comprising program code for performing the method according to one of Claims 1 to 9 when the computer program is executed on a computer, in particular on a message broker (209).

## Revendications

1. Procédé de commande d'une transmission de message entre des communicants (203) d'un système d'automatisation (201, 301), au moins une application d'éditeur et/ou une application d'abonné étant exécutée(s) au niveau des communicants (203), le système d'automatisation (201, 301) comprenant un transmetteur de messages (209) adapté pour enregistrer des abonnements à des thèmes spécifiés destinés à des applications d'abonnés connues dans une arborescence de thèmes, le procédé comprenant les étapes suivantes :
- en réponse au fait qu'un message (339) sur un thème spécifié (305,..., 327) de l'arborescence de thèmes a été publié par une application d'éditeur d'un premier communiquant (205, 329) de la pluralité de communicants (203),
- déterminer (101) à l'aide du transmetteur de messages (209) si une application d'abonné d'un deuxième communiquant (207, 331) de la pluralité de communicants (203) a été enregistrée pour le thème spécifié (305,..., 327),
- si une application d'abonné est enregistrée pour le thème spécifié (305,..., 327), transmettre (103) un message (339) à l'aide du transmetteur de message (209) à l'application d'abonné enregistrée du deuxième communicant (207, 331),
**caractérisé en ce que**
le premier communicant (205, 329) offre au moins un service, le message de l'application d'éditeur du premier communicant (205, 329) comprenant l'information relative au thème de l'arborescence de thèmes dans lequel des tâches relatives à l'au moins un service doivent être publiées, le procédé comprenant en outre les étapes suivantes :
- enregistrer à l'aide du transmetteur de message (209) un abonnement généré à l'aide d'une application d'abonné du premier communicant (205, 329) et relatif au thème (305,..., 327) dans quel thème de l'arborescence de thèmes des tâches relatives à l'au moins un service doivent être publiées,
- en réponse au fait qu'un message concernant le thème (305,... ; 327) de l'arborescence de thèmes, dans lequel des tâches relatives à l'au moins un service doivent être publiées, a été publié par une application d'éditeur du deuxième communicant (207, 331), que la tâche (603) correspondant à l'au moins un service doit être exécutée, transmettre à l'application d'abonné enregistrée du premier communicant (205, 329) à l'aide du transmetteur de message (209) le message publié selon lequel la tâche (603) correspondant à l'au moins un service doit être exécutée.

2. Procédé selon la revendication 1, la tâche indiquant que des messages d'un thème déterminé (305,..., 327) de l'arborescence de thèmes doivent être traités à l'aide de l'au moins un service, le procédé comprenant en outre les étapes suivantes :
- en réponse au fait qu'un abonnement relatif au thème déterminé (305,..., 327) a été généré par une application d'abonné du premier communicant (205, 329),
- enregistrer l'application d'abonné du premier communicant (205, 329) pour le thème déterminé (305,..., 327) à l'aide du transmetteur de messages (209),
- transmettre des messages relatifs au thème déterminé (305,..., 327) à l'application d'abonné du premier communicant (205, 329) à l'aide du transmetteur de messages (209).

3. Procédé selon l'une des revendications précédentes, la tâche indiquant que des données traitées à l'aide du premier communicant (205, 329) et relatives à un thème spécifique (305,..., 327) de l'arborescence de thèmes doivent être publiées, le procédé comprenant l'étape suivante :
- en réponse au fait qu'un message contenant les données traitées et relatif au thème spécifique (305,..., 327) a été publié par une application d'éditeur du premier communicant (205, 329), transmettre le message contenant les données traitées à une application d'abonné, enregistrée pour le thème spécifique (305,..., 327), du deuxième communicant (207, 331) à l'aide du transmetteur de messages (209).

4. Procédé selon l'une des revendications précédentes, le message selon lequel le premier communicant (205, 329) offre au moins un service, comprenant une description de commandes indiquant quelles commandes sont attendues par l'au moins un service et/ou une description de paramètres indiquant quels paramètres sont attendus par l'au moins un service, le procédé comprenant l'étape suivante :
- transmettre la description de commandes et/ou la description de paramètres à l'application d'abonné enregistrée du deuxième communicant (207, 331) à l'aide du transmetteur de messages (209).

5. Procédé selon l'une des revendications précédentes, comprenant l'étape suivante :
- en réponse au fait qu'un message a été publié par une application d'éditeur de l'un des communicants (203) relativement à un thème (305,..., 327), le message comprenant une description de données indiquant comment des données de l'un des communicants (203) doivent être interprétées, mémoriser la description de données à l'aide du transmetteur de messages (209).

6. Procédé selon l'une des revendications précédentes dans la mesure où elle se rapporte à la revendication 5 et à la revendication 2, le thème déterminé {305,..., 327) de l'arborescence de thèmes correspondant au thème (305,..., 327), qui correspond au message, de l'un des communicants (203), le procédé comprenant l'étape suivante :
- transmettre la description de données à l'application d'abonné du premier communicant (205, 329) à l'aide du transmetteur de messages (209).

7. Procédé selon l'une des revendications précédentes, les messages étant au format binaire.

8. Procédé selon l'une des revendications précédentes, l'au moins un service étant sélectionné dans le groupe de services suivant : archivage, analyse de données, surveillance des états.

9. Procédé selon l'une des revendications précédentes, la pluralité de communicants (203) étant sélectionnée dans le groupe suivant de communicants (203) : dispositif actionneur, dispositif capteur, dispositif de commande, dispositif de commande de machine, serveur de base de données, serveur de sauvegarde de données.

10. Transmetteur de messages (209) destiné à un système d'automatisation (201, 301), le transmetteur de messages (209) étant adapté pour mettre en œuvre le procédé selon l'une des revendications précédentes.

11. Système d'automatisation (201, 301), comprenant une pluralité de communicants (203) et le transmetteur de messages (209) selon la revendication 10.

12. Logiciel comprenant un code de programme destiné à la mise en œuvre du procédé selon l'une des revendications 1 à 9, lorsque le logiciel est exécuté sur un ordinateur, en particulier sur un transmetteur de messages (209).
